# FASCICULE DE BREVET EUROPEEN

(11) **EP 0 677 426 B1**
(45) Date de publication et mention de la délivrance du brevet: **08.07.1998**
(21) Numéro de dépôt: 95400715.9
(22) Date de dépôt: 30.03.1995
(51) Int. Cl.: B60Q 1/26

(54) **Dispositif de signalisation pour véhicules**
Signaleinrichtung für Kraftfahrzeuge
Signaling device for vehicle

(30) Priorité: 12.04.1994 FR 9404315
(43) Date de publication de la demande: 18.10.1995
(73) Titulaire: COMPAGNIE D'EQUIPEMENTS AUTOMOBILES AXO SCINTEX, F-91300 Villemoisson-sur-Orge (FR)
(72) Inventeur: Mauviere, Jean-Paul, F-27180 Les Baux Sainte-Croix (FR)
(74) Mandataire: Faber, Jean-Paul

(56) Documents cités:
- DE-A- 3 436 988
- DE-U- 8 903 289
- FR-A- 2 510 313
- FR-A- 2 693 415
- US-A- 2 099 444

## Description

L'invention se rapporte à un dispositif de signalisation pour véhicules.

L'invention vise des dispositifs qui comprennent un corps destiné à être fixé sur le véhicule, un voyant fixé sur le corps, et constitué d'un cabochon translucide, une douille fixée sur le corps et destinée à recevoir une lampe d'éclairage, et des connexions permettant de relier la douille à un circuit d'alimentation. Un tel dispositif est décrit dans la demande de brevet français n° 2 693 415.

Un tel dispositif est complexe compte tenu de la multiplicité des pièces le composant et est, par conséquent, cher.

L'un des buts de la présente invention est de réaliser un dispositif répondant au même but et qui soit beaucoup plus simple et beaucoup moins onéreux.

Le dispositif de signalisation, objet de l'invention, est du type comprenant un corps destiné à être fixé à une paroi du véhicule et pourvu d'une embase, au moins une lampe et un voyant translucide masquant la lampe, des contacts pour coopérer avec les contacts de la lampe, ledit dispositif étant caractérisé en ce que le corps est moulé en une seule pièce en incluant une partie de la lampe et les contacts destinés à coopérer avec ceux de ladite lampe. Grâce à cette disposition, on réalise un dispositif de signalisation très peu onéreux qui constitue un élément jetable et remplaçable par un autre lorsque la lampe ne fonctionne plus.

Suivant un détail particulier, l'embase, sur sa face destinée à recevoir le voyant, comporte, venue de moulage, un rebord contre lequel est soudé le bord correspondant du voyant.

Suivant une variante de réalisation, l'embase, sur sa face destinée à recevoir le voyant, comporte, venue de moulage, une saillie continue pourvue d'une gorge, tandis que le bord interne correspondant du voyant est pourvu d'un bourrelet pour permettre son montage par emboîtement élastique.

Suivant une caractéristique constructive, l'embase, sur sa face opposée à celle pourvue du voyant, comporte, venu de moulage, au moins un voile pourvu d'une saillie de retenue et, décalée angulairement, au moins d'une patte élastique présentant un épaulement. On réalise ainsi un dispositif simple à monter sur une paroi dans une ouverture de celle-ci.

Suivant encore une variante de réalisation, le corps comporte, sur son embase, une série de lampes, une série de contacts étant prévus pour coopérer avec les contacts des lampes et reliés à des pistes conductrices noyées dans le corps lors du moulage et aboutissant à des languettes destinées à recevoir une prise reliée à une source de courant.

Suivant encore une variante de réalisation, les contacts destinés à coopérer avec les contacts des lampes font saillie, par leur extrémité, sur l'une des faces de l'embase et sont reliés à des pistes fixées à ladite embase.

Enfin, les pistes comportent des pattes pour leur sertissage sur les extrémités des contacts.

L'invention va maintenant être décrite avec plus de détails en se référant à des modes de réalisation particuliers donnés à titre d'exemple seulement et représentés aux dessins annexés, dans lesquels :
Figure 1 est une vue en coupe d'un dispositif, selon l'invention, suivant la ligne 1-1 de la figure 2.
Figure 2 est une vue en coupe suivant la ligne 2-2 de la figure 1.
Figure 3 est une vue en coupe similaire à la figure 2 d'une variante de réalisation.
Figure 4 est une vue en coupe d'une autre forme de réalisation de l'invention.
Figure 5 montre schématiquement la face arrière du dispositif de la figure 4.
Figure 6 montre en coupe à plus grande échelle le montage d'une lampe.
Figure 7 montre en coupe une variante du montage du circuit des lampes.
Figure 8 est une vue en perspective d'un détail de la figure 7.

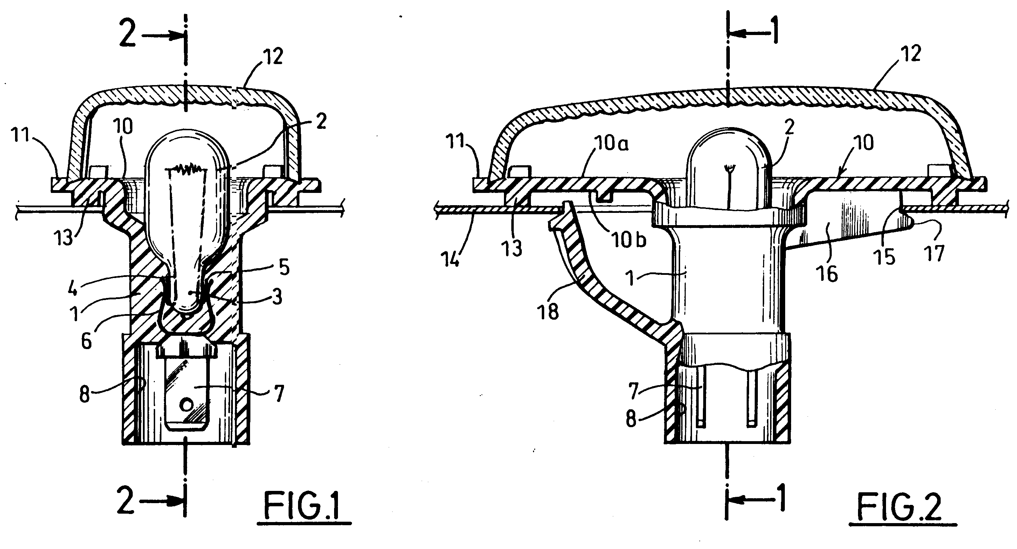

Aux figures 1 et 2, on a représenté un dispositif de signalisation pour véhicule qui comprend un corps 1 réalisé en une matière plastique et qui est directement moulé sur une lampe 2.

La lampe 2 est du type dit : "Wedge base", c'est-à-dire sans culot avec une extrémité de branchement méplate 3 sur une des faces de laquelle est replié un conducteur 4, tandis que sur l'autre face est replié un conducteur 5.

La lampe est en partie noyée par surmoulage dans le corps 1 dans lequel sont noyées deux pinces élastiques (contacts) 6 dont l'une coopère avec le conducteur 4 et l'autre avec le conducteur 5, chaque pince élastique 6 est solidaire d'une languette mâle 7 s'étendant à l'intérieur d'une jupe 8 réalisée avec le corps 1.

Le corps 1, du côté opposé à la jupe, est conformé pour présenter une embase 10 de forme générale rectangulaire pourvue, sur sa face 10a opposée à celle (10b) tournée du côté de la jupe, d'un rebord 11 contre lequel vient porter le bord d'un voyant 12 qui est soudé contre ladite embase.

Le voyant 12 est constitué par un cabochon translucide, par exemple, orangé, rouge ou vert.

L'embase 10, sur sa face 10b, présente, d'une part, un bourrelet 13 destiné à être appliqué contre une paroi 14 et, d'autre part, un ou plusieurs voiles 16 décalés angulairement et s'insérant dans une ouverture 15 de ladite paroi, lesdits voiles 16 présentant une saillie de retenue 17.

Afin de permettre la fixation du corps 1 sur la paroi 14, ledit corps comporte une patte élastique 18 venue de moulage avec le corps et présentant un épaulement 19 à son extrémité libre destiné à porter contre le bord de l'ouverture 15.

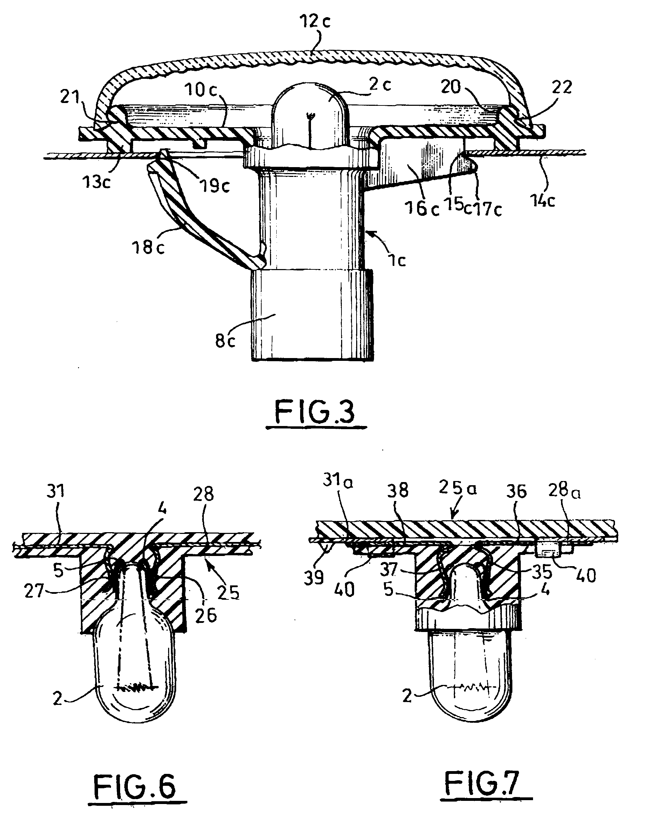

A la figure 3, on a représenté une variante de réalisation. Sur cette figure, on a reporté les mêmes références que celles utilisées pour désigner les organes correspondants des figures précédentes mais affectées de la lettre "c".

Dans ce mode de réalisation, l'embase 10c comporte une saillie continue 20 au voisinage de son bord présentant une gorge 21, tandis que le voyant 12c présente, le long de son bord interne, un bourrelet 22 de sorte que le voyant peut être monté sur l'embase par un simple emboîtement élastique.

La figure 4 montre en coupe une variante de réalisation dans laquelle un corps 25 est moulé d'une seule pièce en incluant quatre lampes 2.

Les lampes 2 sont du même type "Wedge base" que celui des figures précédentes, les contacts 4 portant contre des contacts 26 solidaires de barrettes 28 noyées dans l'épaisseur du corps 25 et reliées à une languette mâle 30, tandis que les contacts 6 portent contre des contacts correspondants 27 solidaires de barrettes 31 reliées à une languette mâle 32.

Les barrettes 28 et 31 sont réalisées en un métal bon conducteur de l'électricité et constituent des pistes conductrices pour l'alimentation des lampes 2, les languettes mâles 30 et 32 étant destinées à recevoir une prise femelle reliée à une source d'alimentation.

Sur la face correspondante du corps 25 est fixé un ensemble de réflecteurs 33 dont le bord reçoit un voyant 34 soudé ou emboîté. L'ensemble du réflecteur 33 comporte des pattes 42 avec un ardillon et qui s'engagent dans des trous 43 du corps 25.

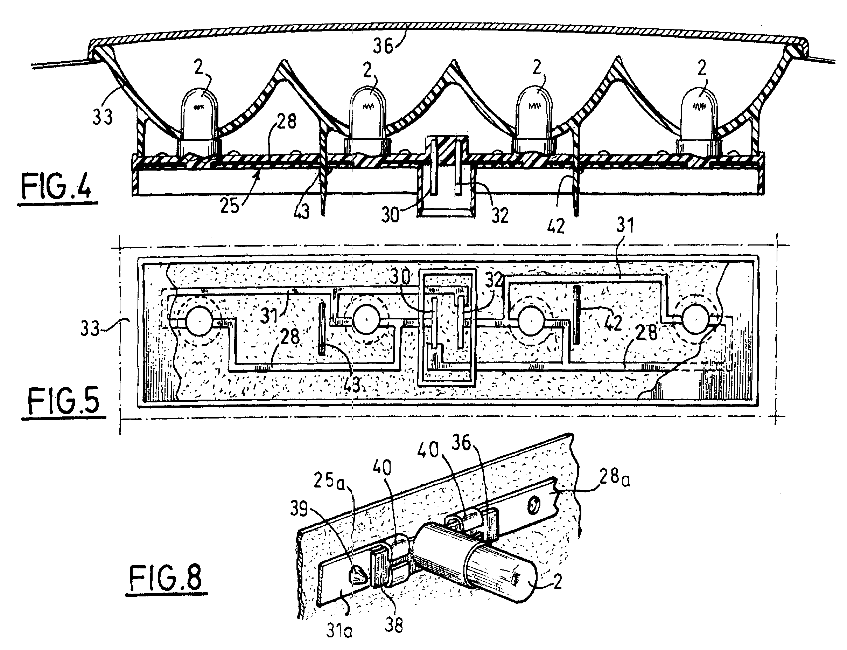

Les figures 7 et 8 montrent une variante dans laquelle le contact 4 de chaque lampe 2 coopère avec un contact 35 noyé dans le corps et dont une extrémité 36 fait saillie du côté de la face du corps tourné vers les réflecteurs, tandis que les contacts 5 portent contre des contacts 37 dont une extrémité 38 fait également saillie sur la face du corps 25a tournée du côté des réflecteurs. Les pistes 28a et 31a sont fixées sur la face correspondante du corps 25 par écrasement, par exemple, de saillies 39, lesdites pistes comportant des pattes 40 destinées à être serties sur les extrémités 36 et 38 pour assurer la liaison électrique.

Bien entendu, l'invention n'est pas limitée aux modes de réalisation qui viennent d'être décrits et représentés. On pourra y apporter de nombreuses modifications de détail sans sortir pour cela du cadre de l'invention. L'etendue de la protection est déterminée par la teneur des revendications ci-dessous.

## Revendications

1. Dispositif de signalisation pour véhicules du type comprenant un corps (1, 1c, 25, 25a) destiné à être fixé à une paroi du véhicule et pourvu d'une embase (10, 10c), d'au moins une lampe (2) et d'un voyant translucide (12 12c; 36) masquant la lampe (2), de contacts (6; 26, 27; 35, 37) pour coopérer avec les contacts (4, 5) de la lampe (2), caractérisé en ce que le corps (1; 1c; 25; 25a) est moulé en une seule pièce en incluant une partie de la lampe (2) et les contacts (6; 26, 27; 35, 37) destinés à coopérer avec ceux de ladite lampe (6; 26, 27; 35, 37).

2. Dispositif de signalisation pour véhicules, selon la revendication 1, caractérisé en ce que l'embase (10), sur sa face destinée à recevoir le voyant (12). comporte, venu de moulage, un rebord (11) contre lequel est soudé le bord correspondant du voyant (12),

3. Dispositif de signalisation pour véhicules, selon la revendication 1, caractérisé en ce que l'embase (10c), sur sa face destinée à recevoir le voyant (12c), comporte, venue de moulage, une saillie continue (20) pourvue d'une gorge (21), tandis que le bord interne correspondant du voyant (12c) est pourvu d'un bourrelet (22) pour permettre son montage par emboîtement élastique.

4. Dispositif de signalisation pour véhicules, selon la revendication 1, caractérisé en ce que l'embase (10), sur sa face opposée à celle pourvue du voyant (12), comporte, venu de moulage, au moins un voile (16) pourvu d une saillie de retenue (17) et, décalée angulairement, au moins une patte élastique (18) présentant un épaulement (19).

5. Dispositif de signalisation pour véhicules, selon la revendication 1, caractérisé en ce que le corps comporte, sur son embase, une série de lampes (2), une serie de contacts (26, 27) étant prévus pour coopérer avec les contacts (4, 5) des lampes et reliés à des pistes conductrices (28, 31) noyées dans le corps lors du moulage et aboutissant à des languettes (30, 32) destinées à recevoir une prise reliée à une source de courant.

6. Dispositif de signalisation pour véhicules, selon la revendication 1, caractérisé en ce que les contacts (35, 37) destinés à coopérer avec les contacts (4, 5) des lampes (2) font saillie, par leur extrémité (36, 38), sur l'une des faces de l'embase et sont reliés à des pistes (28a, 31a) fixées à ladite embase 25a).

7. Dispositif de signalisation pour véhicules, selon la revendication 6, caractérisé en ce que les pistes (28a, 31a) comportent des pattes (40) pour leur sertissage sur les extrémités (36, 37) des contacts.

## Claims

1. A signalling device for vehicles of the type comprising a body (1, 1c, 25, 25a) intended to be fixed to a wall of the vehicle and provided with a base (10, 10c), at least one lamp (2) and a translucent glass (12c; 36) masking the lamp (2), contacts (6; 26, 27; 35, 37) to cooperate with the contacts (4, 5) of the lamp (2), characterised in that the body (1; 1c; 25; 25a) is moulded in a single piece by including a part of the lamp (2) and the contacts (6; 26, 27; 35, 37) intended to cooperate with those of the said lamp (6; 26, 27; 35, 37).

2. A signalling device for vehicles, according to Claim 1, characterised in that the base (10), on its face intended to receive the glass (12), comprises, moulded in one piece, a rim (11) against which the corresponding edge of the glass (12) is welded.

3. A signalling device for vehicles, according to Claim 1, characterised in that the base (10c), on its face intended to receive the glass (12c), comprises, moulded in one piece, a continuous projection (20) provided with a groove (21), whereas the corresponding internal edge of the glass (12c) is provided with a bulb (22) to enable its mounting by elastic interlocking.

4. A signalling device for vehicles, according to Claim 1, characterised in that on its face opposite that provided with the glass (12), the base (10) comprises, moulded in one piece, at least one web (16) provided with a retaining projection (17) and, angularly offset, at least one resilient lug (18) having a shoulder (19).

5. A signalling device for vehicles, according to Claim 1, characterised in that the body comprises, on its base, a series of lamps (2), a series of contacts (26, 27) being provided to cooperate with the contacts (4, 5) of the lamps and connected to strip conductors (28, 31) embedded in the body during moulding and ending in blades (30, 32) intended to receive a socket connected to a current source.

6. A signalling device for vehicles, according to Claim 1, characterised in that the contacts (35, 37) intended to cooperate with the contacts (4, 5) of the lamps (2) protrude, by their end (36, 38), on one of the faces of the base and are connected to strips (28a, 31a) fixed to the said base 25a).

7. A signalling device for vehicles, according to Claim 6, characterised in that the strips (28a, 31a) comprise lugs (40) for their crimping onto the ends (36, 37) of the contacts.

## Patentansprüche

1. Signaleinrichtung für Fahrzeuge mit einem Körper (1, 1c, 25, 25a), der an einer Fahrzeugwand befestigt ist und versehen ist mit einer Basis (10; 10c), mindestens einer Lampe (2) und einer die Lampe (2) umgebenden transparenten Abdeckung (12; 36), Kontakten (6; 26, 27; 35, 37) zur Verbindung mit den Kontakten (4, 5) der Lampe (2), dadurch gekennzeichnet, daß der Körper (1; 1c; 25; 25a) als einstückiges Teil gegossen ist, das einen Abschnitt der Lampe (2) und die Kontakte (6; 26, 27; 35, 37), die mit denen der Lampe (2) zusammenwirken, einschließt.

2. Signaleinrichtung für Fahrzeuge nach Anspruch 1, dadurch gekennzeichnet, daß die Basis (10) an seiner zur Aufnahme der Abdeckung (12) dienenden Seite eine beim Gießen entstehende Randleiste (11) aufweist, an der der entsprechende Rand der Abdeckung (12) angeschweißt ist.

3. Signaleinrichtung für Fahrzeuge nach Anspruch 1, dadurch gekennzeichnet, daß die Basis (10c) an seiner zur Aufnahme der Abdeckung (12c) dienenden Seite einen beim Gießen entstehenden kontinuierlichen Vorsprung (20) aufweist, der mit einem Hals (21) versehen ist, während der der Abdeckung (12c) zugeordnete Innenrand mit einem Wulst (22) versehen ist, um ihre Montage durch eine elastische Einsteckverbindung zu ermöglichen.

4. Signaleinrichtung für Fahrzeuge nach Anspruch 1, dadurch gekennzeichnet, daß die Basis (10) an seiner von der Abdeckung (12) abgewandten Seite mindestens einen durch den Gießvorgang gebildeten Flügel (16) aufweist, der mit einem Haltevorsprung (17) und, winkelmäßig versetzt, mindestens einer elastischen Klaue (18), die eine Schulter (19) aufweist, versehen ist.

5. Signaleinrichtung für Fahrzeuge nach Anspruch 1, dadurch gekennzeichnet, daß der Körper an seiner Basis eine Reihe von Lampen (2) aufweist, wobei mehrere Kontakte (26, 27) zur Verbindung mit den Kontakten (4, 5) der Lampen vorgesehen und mit Leiterbahnen (28, 31) verbunden sind, die durch den Gießvorgang in den Körper eingebettet sind und in Zungen (30, 32) münden, die zur Aufnahme eines mit einer Stromquelle verbundenen Abgriffs dienen.

6. Signaleinrichtung für Fahrzeuge nach Anspruch 1, dadurch gekennzeichnet, daß die Kontakte (35, 37) zur Verbindung mit den Kontakten (4, 5) der Lampen (2) an ihrem Ende (36, 38) zu einer der Seiten der Basis vorstehen und mit Leiterbahnen (28a, 31a) verbunden sind, die an der Basis (25a) befestigt sind.

7. Signaleinrichtung für Fahrzeuge nach Anspruch 6, dadurch gekennzeichnet, daß die Leiterbahnen (28a, 31a) Klauen (40) für ihre Falzverbindung mit den Enden (36, 37) der Kontakte aufweisen.
